# EUROPÄISCHE PATENTSCHRIFT

(11) **EP 3 308 862 B1**
(45) Veröffentlichungstag und Bekanntmachung des Hinweises auf die Patenterteilung: **09.12.2020**
(21) Anmeldenummer: 17191543.2
(22) Anmeldetag: 18.09.2017
(51) Int. Cl.: B02C 15/00

(54) **LAGERELEMENT GEEIGNET FÜR DIE LAGERUNG EINES MAHLTELLERS IN EINER WÄLZMÜHLE**
BEARING ELEMENT ADAPTED FOR SUPPORTING A GRINDING TABLE IN A ROLLER MILL
ÉLÉMENT DE PALIER CONÇU POUR SUPPORTER UN PLATEAU DE BROYAGE DANS UN BROYEUR À ROULEAUX

(30) Priorität: 12.10.2016 DE 102016119377
(43) Veröffentlichungstag der Anmeldung: 18.04.2018
(73) Patentinhaber: Gebr. Pfeiffer SE, 67655 Kaiserslautern (DE)
(72) Erfinder: HOFFMANN, Dirk, 67705 Trippstadt (DE); FRANKENBERGER, Ralf, 67661 Kaiserslautern (DE); SCHÜTTE, Karl-Heinz, 67705 Trippstadt (DE)
(74) Vertreter: Patentanwälte Dr. Keller, Schwertfeger Partnerschaft mbB

(56) Entgegenhaltungen:
- DE-A1-102014 000 549
- US-A1- 2011 210 196

## Beschreibung

Die vorliegende Erfindung betrifft ein Lagerelement geeignet für die Lagerung eines Mahltellers in einer Wälzmühle, umfassend ein platten- oder scheibenförmiges Grundelement, ein Ringelement und ein Abstandselement. Ferner betrifft die vorliegende Erfindung eine Mahltellerantriebsanordnung mit einem solchen Lagerelement.

Wälzmühlen umfassen einen drehbaren Mahlteller und darauf abrollende Mahlwalzen. Um den Mahlteller in Drehung zu versetzen, können entweder der Mahlteller oder die Mahlwalzen angetrieben werden.

In beiden Fällen ist es notwendig, die im Verarbeitungsprozess auftretenden axialen Kräfte in Axiallagern aufzunehmen.

Wie beispielsweise in der DE 39 31 116 A1 beschrieben ist, werden die in axialer Richtung wirkenden Druckkräfte über Axialdrucklager, die sich auf einem Fundament abstützen, aufgenommen.

Axialdrucklager bestehen üblicherweise aus mehreren kreisförmig nebeneinander angeordneten Axiallagersegmenten.

Das Fundament kann aus Fertigungsgründen Unebenheiten aufweisen, die zu Höhenunterschieden der einzelnen Axiallagersegmente untereinander führen. Dies führt dazu, dass die Schmierspalten an den einzelnen Axiallagersegmenten unterschiedlich groß sind. Die Schmierfilmdicke beeinflusst jedoch die Tragfähigkeit eines einzelnen Axiallagersegments. So führt eine Erhöhung der Dicke des Schmierspaltes zu einer massiven Reduktion der Tragfähigkeit eines einzelnen Axiallagersegments.

Darüber hinaus können auch einzelne Axiallagersegmente aufgrund von Fertigungstoleranzen unterschiedliche Höhen aufweisen, was ebenfalls dazu führt, dass sich die Schmierspaltdicke von Axiallagersegment zu Axiallagersegment unterscheidet.

Zum Ausgleich der Höhenunterschiede zwischen den einzelnen Axiallagersegmenten wurden bereits verschiedene Möglichkeiten vorgeschlagen. Es wurden höhenverstellbare oder elastische Lagerelemente vorgeschlagen.

So beschreibt die DE 10 2010 007 929 A1 beispielsweise ein elastisches Lagerelement. Im Detail offenbart die DE 10 2010 007 929 A1 ein auf einem Fundament oder Trägerelement montierbares ringförmiges Grundelement, das einen mit dem Fundament oder Trägerelement verbindbaren Grundkörper und ein hohles Ringelement umfasst. Das hohle Ringelement ragt über den Grundkörper hinaus. Auf dem Ringelement sind mehrere Axialgleitlagersegmente angeordnet. Die Steifigkeit des Ringelements ist so gewählt, dass Unebenheiten im Fundament kompensiert werden, um negative Einflüsse von Unebenheiten des Fundaments auf den Schmierspalt zu vermeiden.

Bei der in DE 10 2010 007 929 A1 beschriebenen Baugruppe handelt es sich um eine vergleichsweise aufwändige Konstruktion. Darüber hinaus führen axiale Belastungen zu Biege- oder Membranspannungen statt zu einfachen Druckspannungen. Weiterhin lässt sich die beschriebene Baugruppe nur schwer auf eine andere Segmentanzahl und andere Kräfte anpassen.

Es ist Aufgabe der vorliegenden Erfindung, ein Lagerelement bereitzustellen, das für die Lagerung eines Mahltellers in einer Wälzmühle geeignet ist, welches einfach herstellbar ist und einfach an verschiedene Segmentanzahlen und Segmentgrößen angepasst werden kann. Insbesondere ist es Aufgabe der vorliegenden Erfindung, ein Lagerelement bereitzustellen, dessen elastisches Verhalten einfach an gewünschte Bedingungen anpassbar ist.

Erfindungsgemäß wird die Aufgabe gelöst durch ein Lagerelement geeignet für die Lagerung eines Mahltellers in einer Wälzmühle, umfassend ein platten- oder scheibenförmiges Grundelement, eine Ringscheibe und ein Abstandselement, wobei die Ringscheibe im Wesentlichen parallel und im Abstand von dem Grundelement angeordnet ist, an ihrer Unterseite mittels eines ringförmigen Abstandselements mit dem Grundelement verbunden ist und an ihrer Oberseite Mittel zur Aufnahme von Axiallagersegmenten aufweist, wobei das Abstandselement als ein sich in Axialrichtung erstreckendes, ringförmiges Band ausgebildet ist und in Umfangsrichtung eine Vielzahl von im Abstand angeordneten Bögen aufweist, deren Öffnungen in Richtung des Grundelements weisen.

Das Lagerelement ist einfach und kostengünstig herzustellen. Darüber hinaus ist es flexibel für eine Vielzahl unterschiedlicher Anforderungen einsetzbar, da die Axiallagersegmente je nach Anforderung auf der Ringscheibe verteilt werden können.

Für eine Anpassung an unterschiedliche Mühlengrößen und Lasten können insbesondere die Anzahl und/oder die Größe der Axiallagersegmente variieren sowie der Abstand der Axiallagersegmente untereinander und die Position der Axiallagersegmente in Bezug auf die darunterliegenden Bögen des Abstandselements.

Es ist von Vorteil, dass die Anzahl der Bögen des Abstandselements der Anzahl von Axiallagersegmenten, die auf dem Ringelement befestigt sind, entspricht. Hiermit lässt sich eine optimale Verteilung der in Axialrichtung auftretenden Kräfte erreichen.

Gemäß einer bevorzugten Ausführungsform ist die Vielzahl von im Abstand angeordneten Bögen arkadenförmig ausgebildet. Unter arkadenförmigen Bögen wird eine Reihe von Bögen verstanden, die von Pfeilern oder Säulen getragen werden.

Es ist weiter bevorzugt, dass das Abstandselement wenigstens einen Bogenpfeiler aufweist, dessen Länge in Umfangsrichtung größer als dessen Dicke in Radialrichtung ist. Diese Anordnung hat sich als vorteilhaft erwiesen, um die Axialkräfte gleichmäßig aufzunehmen.

Zur Vermeidung von Spannungskonzentrationen ist es von Vorteil, dass das Abstandselement wenigstens einen Bogenpfeiler mit einer Seitenwand aufweist, die im Bereich des Grundelements nach außen erweitert ist. Hierbei hat es sich als besonders vorteilhaft erwiesen, dass die Seitenwand im Bereich des Grundelements bogenartig, insbesondere konkav nach außen erweitert ist.

Um eine Mahltellerantriebsanordnung, die ein erfindungsgemäßes Lagerelement aufweist, besonders platzsparend zu gestalten, ist es von Vorteil, dass das Lagerelement einen Radiallagerdom aufweist.

Zur Fixierung der Ringscheibe ist es bevorzugt, dass eine Vielzahl sich in radialer Richtung von dem Radiallagerdom erstreckende Rippen vorgesehen ist.

Hierbei ist es von Vorteil, dass eine Rippe einen vom Radiallagerdom wegweisenden Rippenarm aufweist, der mit der Ringscheibe verbunden ist. Somit wird einerseits gewährleistet, dass die Ringscheibe bei Belastung nicht kippt und anderseits verhindert, dass die sich in radialer Richtung von dem Radiallagerdom erstreckenden Rippen die axiale Steifigkeit des Lagerelements beeinflussen.

Gegenstand der vorliegenden Erfindung ist auch eine Mahltellerantriebsanordnung, umfassend ein Lagerelement nach einem der vorhergehenden Ansprüche.

Bevorzugte Ausführungsformen werden anhand der beigefügten Zeichnungen näher erläutert, in denen zeigen:
- Fig. 1: eine perspektivische Ansicht eines Lagerelements mit Axiallagersegmenten,
- Fig. 2: die in Fig. 1 dargestellte perspektivische Ansicht eines Lagerelements ohne Axiallagersegmente,
- Fig. 3: eine perspektivische Ansicht des Lagerelements der Fig. 2 von der Seite,
- Fig. 4: einen Querschnitt durch das Lagerelement und
- Fig. 5: eine Draufsicht auf das Lagerelement mit Axiallagersegmenten.

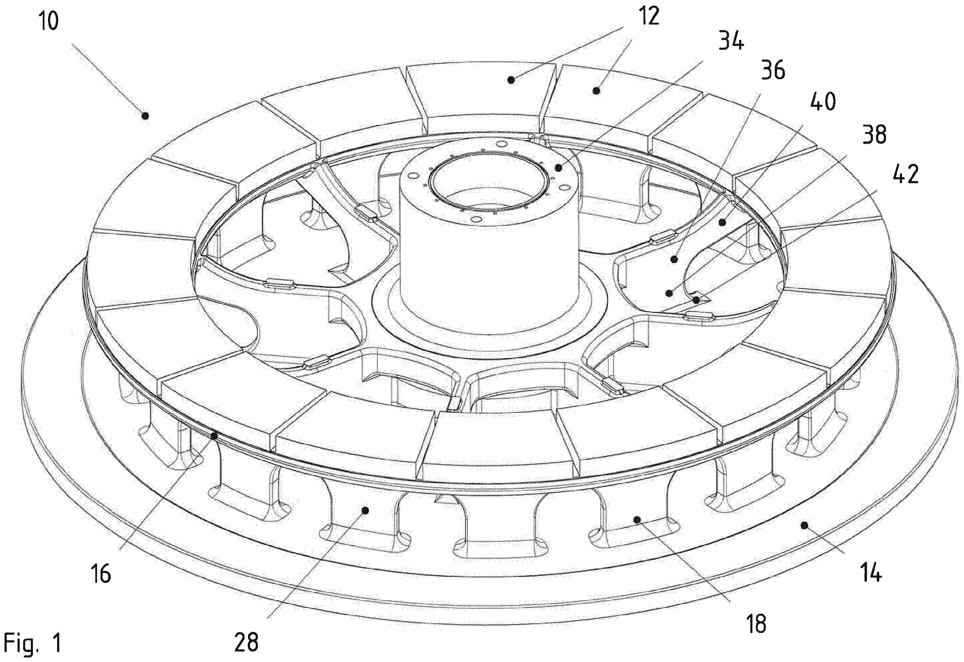

Fig. 1 zeigt ein Lagerelement 10, das für die Lagerung eines Mahltellers in einer Wälzmühle geeignet ist, zusammen mit einzelnen Axiallagersegmenten 12 in perspektivischer Ansicht.

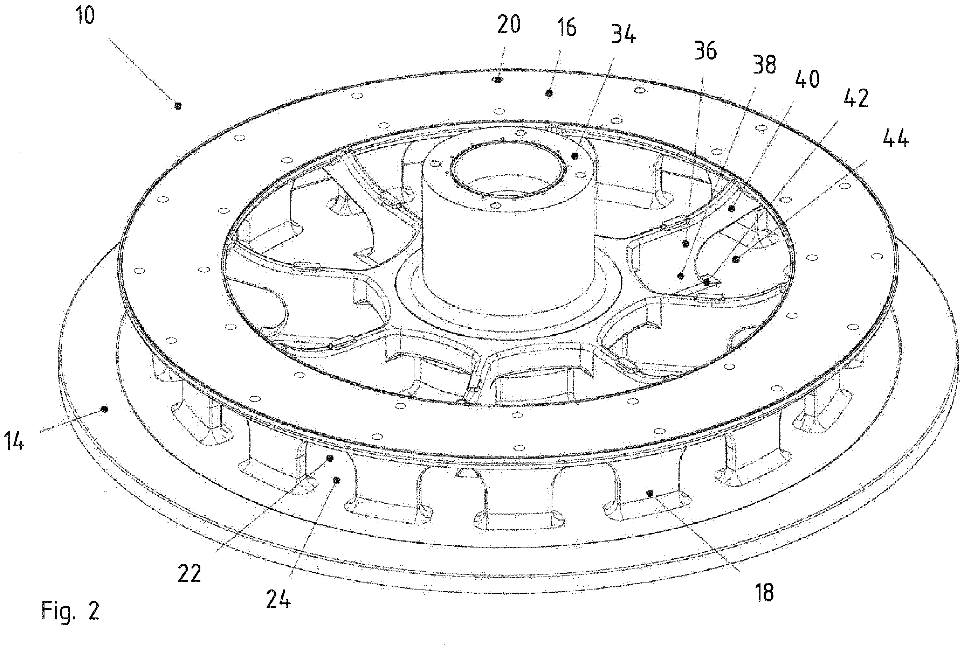

Wie insbesondere in Fig. 2 zu erkennen ist, umfasst das Lagerelement 10 ein scheibenförmiges Grundelement 14, eine Ringscheibe 16 und ein Abstandselement 18.

Das Grundelement 14 ist auf einem nicht dargestellten Träger oder auf einem Fundament montierbar. Bei der dargestellten Ausführungsform ist das Grundelement 14 scheibenförmig ausgebildet. Es ist jedoch nicht zwingend notwendig, dass das Grundelement als runde Scheibe ausgebildet ist. Es kann auch eine andere Form wie beispielsweise eine eckige Platte aufweisen, wobei im Zentrum des platten- oder scheibenförmigen Grundelements auch eine Öffnung vorhanden sein kann.

Die Ringscheibe 16 ist im Wesentlichen parallel und im Abstand von dem Grundelement 14 angeordnet und an ihrer Unterseite mittels des Abstandselements 18 mit dem Grundelement 14 verbunden. An der Oberseite der Ringscheibe 16 befinden sich Mittel zur Aufnahme von Axiallagerelementen in Form von Bohrungen 20.

Die Anzahl und Position der Bohrungen 20 ist an die Anzahl der Axiallagersegmente 12 angepasst, die auf der Ringscheibe 16 angeordnet werden sollen. Die Axiallagersegmente 12 sind vorzugsweise äquidistant und in geringem Abstand zueinander auf der Ringscheibe 16 angeordnet.

Das Abstandselement 18 ist ebenfalls ringförmig ausgebildet und erstreckt sich zylinderförmig in Axialrichtung, wobei die Ringscheibe 16 und das Abstandselement 18 eine gemeinsame Achse besitzen, so dass das Abstandselement 18 die Form eines umlaufenden Bandes aufweist.

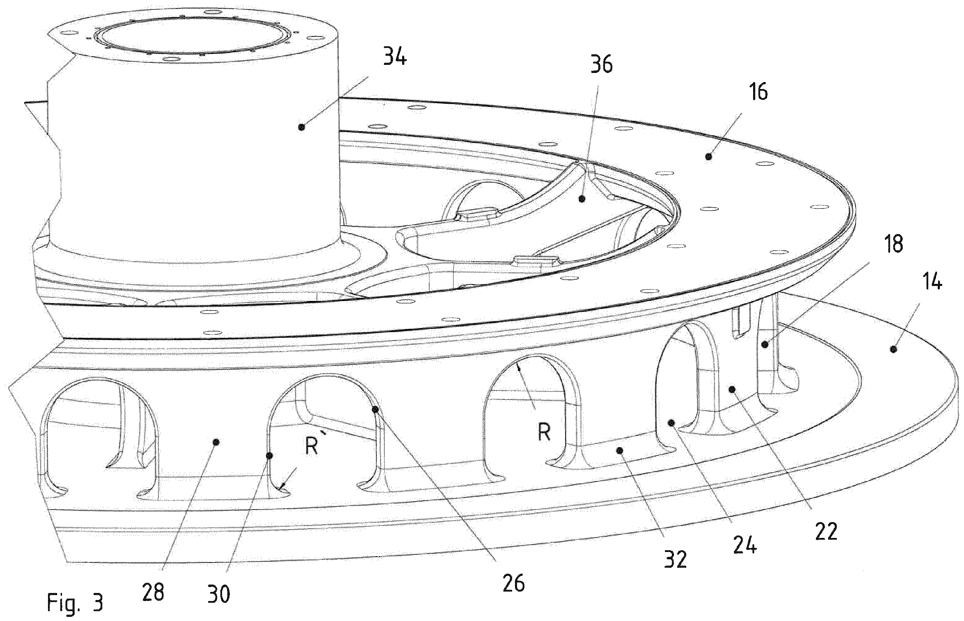

In dem Abstandselement 18 ist in Umfangsrichtung eine Vielzahl von im Abstand angeordneten arkadenförmigen Bögen 22 mit Öffnungen 24 vorgesehen, die jeweils in Richtung des Grundelements 14 weisen (siehe insbesondere Fig. 3). Die Öffnung 24 eines Bogens 22 wird durch ein kreissegmentförmiges Bogenelement 26 mit einem Radius R sowie einen Bogenpfeiler 28 mit einem geradlinigen Bogenpfeilerabschnitt 30 und mit einem an dem Grundelement 14 befestigten Pfeilerfuß 32 begrenzt. Das kreissegmentförmige Bogenelement 26 mündet in der Öffnung 24 beidseitig in den geradlinigen Bogenpfeilerabschnitt 30 (siehe insbesondere Fig. 3).

Der an dem Grundelement 14 befestigte Pfeilerfuß 32 weist an allen Seitenwänden des Bogenpfeilers 28 eine Krümmung mit einem Radius R' auf, die nach außen, insbesondere konkav nach außen läuft.

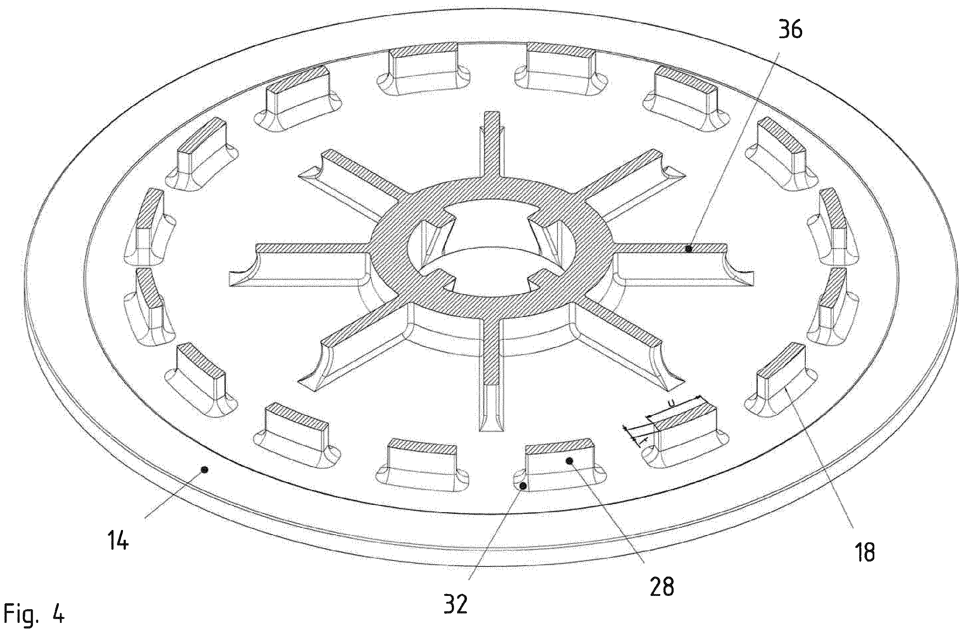

Wie in Fig. 4 zu erkennen ist, weist ein Bogenpfeiler 28 des Abstandselements 18 in Umfangsrichtung eine Länge u auf, die größer als eine Dicke t in Radialrichtung ist.

Die Öffnungen 24 der Bögen 22 weisen alle die gleiche Form auf und sind entlang des Umfangs des Abstandselements 18 äquidistant in dem Abstandselement 18 angeordnet, wobei der Abstand zwischen den einzelnen Öffnungen 24 in etwa der Länge des Bogenpfeilers 28 in Umfangsrichtung entspricht.

Die Geometrie der Bögen 22 kann variiert werden, um die gewünschte axiale Steifigkeit des Lagerelements 10 einzustellen. So können beispielswiese Breite und Höhe einer Öffnung 24, der Radius R und die Länge des kreissegmentförmigen Bogenelements 26, die Querschnittsform des Bogenpfeilers 28, insbesondere die Länge u und die Dicke t des Bogenpfeilers 28, und die Krümmung des Pfeilerfußes 32 verändert werden. Die Kontur der Öffnung 24 kann auch parabelförmig gestaltet sein. Darüber hinaus können die Anzahl der Öffnungen 24 sowie der Abstand zwischen den Öffnungen 24 unterschiedlichen Anforderungen angepasst werden. Schließlich ist es auch möglich, Bögen unterschiedlicher Geometrie zu kombinieren.

Das Abstandselement 18 ist an seiner Stirnseite mittig an der Unterseite der Ringscheibe 16 befestigt.

Auf dem Grundelement 14 ist konzentrisch zu der gemeinsamen Achse der Ringscheibe 16 und des Abstandselements 18 ein Radiallagerdom 34 vorgesehen. Der Radiallagerdom 34 dient der Aufnahme eines Radiallagers und weist einen deutlich geringeren Durchmesser auf als die Ringscheibe 16.

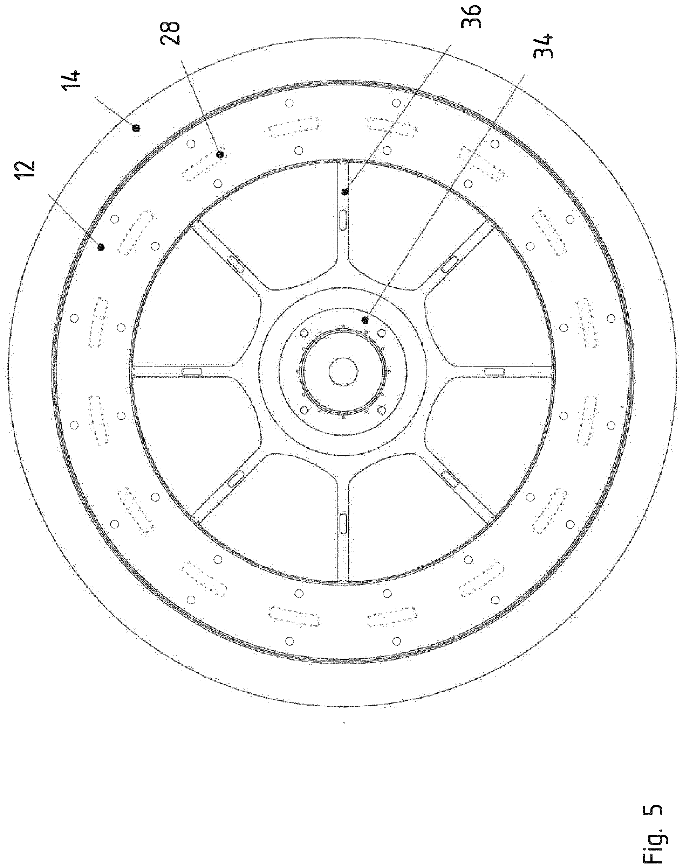

Wie insbesondere in Fig. 5 zu erkennen ist, sind Rippen 36 vorgesehen, die sich in radialer Richtung von dem Radiallagerdom 34 nach außen bis zur Ringscheibe 16 erstrecken. Die Rippen 36 sind in gleichmäßigem Abstand voneinander um den Radiallagerdom 34 angeordnet.

Die Rippen 36 dienen dazu, eine Stabilität der Ringscheibe 16 in radialer Richtung zu gewährleisten, um beispielsweise ein Verkippen unter Last zu verhindern.

Bei einer nicht dargestellten Ausführungsform sind die Rippen jeweils als durchgehende Leisten ausgebildet, die an ihrem freien Ende mit der Ringscheibe verbunden sind.

Eine Stabilisierung der Ringscheibe in radialer Richtung mittels durchgehender Rippen führt üblicherweise jedoch zu einer Beeinflussung der elastischen Eigenschaften der Ringscheibe in dem Lagerelement. So führt eine Erhöhung der Anzahl der Rippen einerseits zu einer Erhöhung der Kippsicherheit der Ringscheibe und andererseits zu einer Reduzierung der Elastizität des Lagerelements in axialer Richtung.

In vielen Anwendungsbereichen ist jedoch eine vergleichsweise hohe Elastizität des Lagerelements 10 in axialer Richtung bei einer hohen Kippsicherheit der Ringscheibe 16 gewünscht.

Wie insbesondere in Fig. 2 zu erkennen ist, weist daher jede Rippe 36 eine Rippenbasis 38 und einen Rippenarm 40 auf, der an der dem Radiallagerdom 34 entgegengesetzten Seite der Rippenbasis 38 eine Verlängerung der Rippenbasis 38 bildet. Die Rippenbasis 38 ist mit dem Grundelement 14 fest verbunden. Die radiale Länge der Rippenbasis 38 ist wesentlich geringer als der Radius des Abstandselements 18, so dass die Rippenbasis 38 mit deutlichem Abstand von dem Abstandselement 18 innerhalb des Abstandselements 18 endet.

Der Rippenarm 40 ist mit seinem einen Ende am oberen Bereich der Rippenbasis 38 und an seinem anderen Ende an der Ringscheibe 16 befestigt. Hierdurch entsteht ein Durchgang 44 zwischen Grundelement 14 und Rippenarm 40.

In dem unteren Bereich der Rippenbasis 38, in dem die Rippenbasis 38 mit dem Grundelement 14 verbunden ist, ist ein Rippenfuß 42 vorgesehen, der an den freien Seitenwänden der Rippenbasis 38 Krümmungen aufweist, die nach außen, insbesondere konkav nach außen laufen.

Die Anzahl der Rippen 36 ist kleiner als die Anzahl der Öffnungen 24 in dem Abstandselement 18.

Bei der in den Fig. 1 bis 5 dargestellten Ausführungsform eines Lagerelements 10 sind die Rippen 36 nicht als durchgehende Leisten ausgebildet, sondern weisen einen Rippenarm 40 auf, der einen Durchgang 44 ausbildet. Die in den Fig. 1 bis 5 dargestellte Ausführungsform eines Lagerelements 10 bietet somit den Vorteil einer vergleichsweise hohen Elastizität in axialer Richtung bei einer vergleichsweise hohen Kippsicherheit der Ringscheibe 16.

Darüber hinaus kann aufgrund der Art der Ausbildung des Rippenarms 40 und/oder des Durchgangs 44 zusätzlich Einfluss auf die axiale Elastizität des Lagerelements 10 genommen werden ohne die Verkippsicherheit nennenswert zu beeinflussen.

Eine weitere Möglichkeit die axiale Steifigkeit des Lagerelements 10 zu beeinflussen, besteht in der Positionierung der Axiallagersegmente 12 auf der Ringscheibe 16.

Fig. 1 zeigt eine Ausführungsform, bei der die Axiallagersegmente 12 über dem Bogenpfeiler 28 angeordnet sind. Bei dieser Ausführungsform bietet das Lagerelement 10 eine vergleichsweise hohe axiale Steifigkeit.

Bei einer alternativen, nicht dargestellten Ausführungsform sind die Axiallagersegmente jeweils über der Öffnung 24 angeordnet. Bei dieser Anordnung ist die axiale Steifigkeit des Lagerelements 10 vergleichsweise niedrig.

Selbstverständlich können die Axiallagersegmente auch in jeder anderen Lage auf der Ringscheibe 16 angeordnet sein, in der sie teilweise auf dem Bogenpfeiler 28 und teilweise auf der Öffnung 24 angeordnet sind, um die gewünschte Steifigkeit der Lagerung zu erreichen.

In Fig. 1 ist eine Ausführungsform dargestellt, bei der die Anzahl der Bögen 22 der Anzahl der Axiallagersegmente 12 entspricht. Es versteht sich, dass die Anzahl der Bögen und die Anzahl der Axiallagersegmente 12 unterschiedlich sein können.

Das Lagerelement 10 kann Teil einer nicht dargestellten Mahltellerantriebsanordnung sein und in Wälzmühlen mit direkt angetriebenen Mahltellern eingesetzt werden.

Alternativ ist der Einsatz des erfindungsgemäßen Lagerelements jedoch auch in Wälzmühlen möglich, bei denen der Mahlteller über angetriebene Mahlwalzen in Drehung versetzt wird.

Das beschriebene Lagerelement 10 weist im Vergleich zu bisher bekannten Lagerelementen eine hohe axiale Elastizität bei einer geringen Höhe in Axialrichtung auf. Dies ist besonders vorteilhaft, wenn die maximale Höhe einer Mühle von Bedeutung ist.

Üblicherweise erfolgt die Herstellung des Lagerelements 10 mittels einer Gussform. Aufgrund der Aufteilung des Lagerelements in ein Grundelement 14, eine Ringscheibe 16 und ein Abstandselement 18 lässt sich das Lagerelement 10 einfach herstellen und an verschiedene Anforderungen bezüglich der Größe und/oder der Elastizität anpassen.

Ist es gewünscht, dass unter Beibehaltung der Größe, insbesondere des Durchmessers des Lagerelements, die Elastizität verändert werden soll, so reicht es aus, nur den Teil der Gussform zu verändern, der die Elastizität beeinflusst, wie etwa das Abstandselement 18.

Die Arkadenform des Abstandselements 18 ermöglicht es, dass die Gussform für das Abstandselement 18 selbst wiederum aus einzelnen einfach herstellbaren, modularen Gussformelementen ausgebildet werden kann.

Die modularen Gussformelemente sind in der Regel einfach an unterschiedliche Anforderungen anpassbar und können darüber hinaus bei unterschiedlichen Grundelementen und/oder Ringscheiben verwendet werden.

## Patentansprüche

1. Lagerelement geeignet für die Lagerung eines Mahltellers in einer Wälzmühle, umfassend ein platten- oder scheibenförmiges Grundelement (14), eine Ringscheibe (16) ein Abstandselement (18) und Axiallagersegmente (12), wobei die Ringscheibe (16) im Wesentlichen parallel und im Abstand von dem Grundelement (14) angeordnet ist und an ihrer Unterseite mittels eines ringförmigen Abstandselements (18) mit dem Grundelement (14) verbunden ist, **dadurch gekennzeichnet, dass** die Ringscheibe (16) an ihrer Oberseite Mittel (20) zur Aufnahme der Axiallagersegmente (12) aufweist und dass das Abstandselement (18) als ein sich in Axialrichtung erstreckendes, ringförmiges Band ausgebildet ist und in Umfangsrichtung eine Vielzahl von im Abstand angeordneten Bögen (22) aufweist, deren Öffnungen (24) in Richtung des Grundelements (14) weisen.

2. Lagerelement nach Anspruch 1, **dadurch gekennzeichnet, dass** die Anzahl der Bögen (22) des Abstandselements (18) der Anzahl der Axiallagersegmente (12) entspricht, die auf der Ringscheibe (16) befestigt sind.

3. Lagerelement nach Anspruch 1 oder 2, **dadurch gekennzeichnet, dass** die Vielzahl von im Abstand angeordneten Bögen (22) arkadenförmig ausgebildet ist.

4. Lagerelement nach einem der vorhergehenden Ansprüche, **dadurch gekennzeichnet, dass** das Abstandselement (18) wenigstens einen Bogenpfeiler (28) aufweist, dessen Länge (u) in Umfangsrichtung größer als dessen Dicke (t) in Radialrichtung ist.

5. Lagerelement nach einem der vorhergehenden Ansprüche, **dadurch gekennzeichnet, dass** das Abstandselement (18) wenigstens einen Bogenpfeiler (28) mit einer Seitenwand aufweist, die im Bereich des Grundelements (14) nach außen erweitert ist.

6. Lagerelement nach Anspruch 5, **dadurch gekennzeichnet, dass** die Seitenwand im Bereich des Grundelements (14) bogenartig nach außen erweitert ist.

7. Lagerelement nach einem der vorhergehenden Ansprüche, **dadurch gekennzeichnet, dass** ein Radiallagerdom (34) vorgesehen ist.

8. Lagerelement nach Anspruch 7, **dadurch gekennzeichnet, dass** eine Vielzahl sich in radialer Richtung von dem Radiallagerdom (34) erstreckender Rippen (36) vorgesehen ist.

9. Lagerelement nach Anspruch 8, **dadurch gekennzeichnet, dass** eine Rippe (36) einen vom Radiallagerdom (34) wegweisenden Rippenarm (40) aufweist, der mit der Ringscheibe (16) verbunden ist.

10. Mahltellerantriebsanordnung umfassend ein Lagerelement (10) nach einem der vorhergehenden Ansprüche.

## Claims

1. A bearing element suitable for supporting a grinding table in a roller mill, comprising a plate or disk-shaped base element (14), a annular disk (16), a spacer element (18) and axial bearing segments (12), wherein the annular disk (16) disposed substantially parallel to the base element (14) and spaced apart from the base element (14), and is connected at its bottom by means of an annular spacer element (18) with the base element (14), **characterized in that** the annular disk (16) has means (20) on its upper side for receiving the axial bearing segments (12) and that the spacer element (18) is designed as an annular strip extending in the axial direction and has a plurality of spaced-apart arches (22) in the circumferential direction, the openings (24) of which point towards the base element (14).

2. The bearing element as claimed in claim 1, **characterized in that** the number of the arches (22) of the spacer element (18) corresponds to the number of axial bearing segments (12), which are secured on the annular disk (16).

3. The bearing element according to claim 1 or 2, **characterized in that** the plurality of spaced-apart arches (22) are in the shape of arcades.

4. The bearing element according to one of the preceding claims, **characterized in that** the spacer element (18) has at least one arch pillar (28), the length (u) of which is larger in the circumferential direction than the thickness (t) in radial direction.

5. The bearing element according to one of the preceding claims, **characterized in that** the spacer element (18) has at least one arch pillar (28) with a side wall, which is enlarged towards the region of the base element (14).

6. The bearing element according to claim 5, **characterized in that** in the region of the base element (14) the side wall is enlarged outwards like an arch.

7. The bearing element according to one of the preceding claims, **characterized in that** a radial bearing dome (34) is provided.

8. The bearing element according claim 7, **characterized in that** a plurality of ribs (36) extending in the radial direction from the radial bearing dome (34) is provided.

9. The bearing element according to claim 8, **characterized in that** a rib (36) has a rib arm (40) which turns away from the radial bearing dome (34) and is connected to the annular disk (16).

10. Grinding table drive arrangement comprising a bearing element (10) according to one of the preceding claims.

## Revendications

1. Elément de palier se prêtant au support d'un plateau de broyage dans un broyeur à rouleaux, comprenant un élément de base (14) en forme de plaque ou de disque, un disque annulaire (16), un élément d'espacement (18) et des segments (12) de palier axial, le disque annulaire (16) étant disposé, pour l'essentiel, parallèlement à l'élément de base (14) et à distance de ce dernier, et étant relié audit élément de base (14) à sa face inférieure, au moyen d'un élément annulaire d'espacement (18), **caractérisé par le fait que** le disque annulaire (16) est pourvu, à sa face supérieure, de moyens (20) conçus pour recevoir les segments (12) de palier axial ; et **par le fait que** l'élément d'espacement (18) est réalisé sous la forme d'une bande annulaire qui s'étend dans la direction axiale et comporte, dans la direction périphérique, une multiplicité d'arceaux (22) agencés de manière espacée et dont les ouvertures (24) pointent en direction de l'élément de base (14).

2. Elément de palier selon la revendication 1, **caractérisé par le fait que** le nombre des arceaux (22) de l'élément d'espacement (18) correspond au nombre des segments (12) de palier axial fixés sur le disque annulaire (16).

3. Elément de palier selon la revendication 1 ou 2, **caractérisé par le fait que** la multiplicité d'arceaux (22), agencés de manière espacée, est réalisée en forme d'arcade.

4. Elément de palier selon l'une des revendications précédentes, **caractérisé par le fait que** l'élément d'espacement (18) est muni d'au moins un montant arqué (28) dont la longueur (u) est supérieure, dans la direction périphérique, à son épaisseur (t) dans la direction radiale.

5. Elément de palier selon l'une des revendications précédentes, **caractérisé par le fait que** l'élément d'espacement (18) est muni d'au moins un montant arqué (28) présentant une paroi latérale élargie, vers l'extérieur, dans la région de l'élément de base (14).

6. Elément de palier selon la revendication 5, **caractérisé par le fait que** la paroi latérale est élargie vers l'extérieur, à la manière d'un arc, dans la région de l'élément de base (14).

7. Elément de palier selon l'une des revendications précédentes, **caractérisé par le fait qu'**il est prévu un dôme (34) de palier radial.

8. Elément de palier selon la revendication 7, **caractérisé par le fait qu'**il est prévu une multiplicité de nervures (36) s'étendant, dans la direction radiale, à partir du dôme (34) de palier radial.

9. Elément de palier selon la revendication 8, **caractérisé par le fait qu'**une nervure (36) est dotée d'un bras (40) s'éloignant du dôme (34) de palier radial et relié au disque annulaire (16).

10. Ensemble d'entraînement d'un plateau de broyage, incluant un élément de palier (10) conforme à l'une des revendications précédentes.
